# EUROPEAN PATENT SPECIFICATION

(11) **EP 2 230 120 B1**
(45) Date of publication and mention of the grant of the patent: **16.10.2019**
(21) Application number: 09179205.1
(22) Date of filing: 15.12.2009
(51) Int. Cl.: B60K 11/08, B62J 17/00, B62J 35/00

(54) **Motorcycle**
Motorrad
Motocyclette

(30) Priority: 16.03.2009 JP 2009062508
(43) Date of publication of application: 22.09.2010
(73) Proprietor: Yamaha Hatsudoki Kabushiki Kaisha, Shizuoka-ken 438-8501 (JP)
(72) Inventor: Morishita, Kensuke, Shizuoka-ken 438-8501 (JP)
(74) Representative: Zimmermann, Tankred Klaus

(56) References cited:
- EP-A1- 1 612 131
- EP-A1- 2 033 885
- EP-A1- 2 159 141
- JP-A- 9 086 462
- JP-A- 2002 264 875
- JP-A- 2006 082 723
- JP-U- 58 089 424
- US-A- 5 715 904
- US-A1- 2003 121 708
- US-A1- 2008 223 643

## Description

### BACKGROUND OF THE INVENTION

### 1. Field of the Invention

The present invention relates to a motorcycle including shrouds for guiding air, which the motorcycle receives during travel, to the engine.

### 2. Description of the Related Art

Conventionally, some motorcycles designed to run mainly on a paved road (for example, a motorcycle disclosed in JP 2006-082723 A) are provided with right and left shrouds for guiding, to the engine, air (wind) which flows rearward over the front fender during travel of the motorcycle. In the motorcycle disclosed in JP 2006-082723 A, the shrouds are fixed onto the side surfaces of the fuel tank, respectively. The shrouds are arranged to extend forward from the side surfaces of the fuel tank, and front portions of the shrouds are curved toward the center of the right-left direction of the motorcycle.

EP 1 612 131 A1 describes a fender structure. A fender is divided into an upper fender and a lower fender and an air guide port is formed in the upper fender. The entry of muddy water splashed up in a tangent line direction by a front wheel into the air guide port is to be prevented and the size of the upper fender is to be reduced. Front forks are each made up of an upper fork supported to a vehicle body side and a lower fork supported to a front wheel side, and an upper fender is secured to the upper forks of the front forks, while a lower fender is secured to the lower forks. The upper fender is disposed in the range in which muddy water is blocked by the lower fender. An air guide port is formed in the upper fender and an air guide path is formed by a fender recess extending forward of the air guide port and a lower portion of a visor which covers the fender recess from above.

JP 2002 264875 A shows the preamble of claim 1 and discloses an engine cooling device for a motorcycle. A fuel tank is arranged on the upper side of the engine and shrouds are provided on left and right sides of the fuel tank. a head light is attached to a front suspension and arranged in front thereof.

### SUMMARY OF THE INVENTION

It is an obj ect of the present invention to provide a motorcycle capable of increasing the amount of the air guided to the engine, and capable of reducing a force acting, outward in the right-left direction of the motorcycle, on the position at which the shroud is fixed to the fuel tank (that is, a force which tends to make the shroud separated from the side surface of the fuel tank).

This object is achieved by a motorcycle as defined in the independent claim.

In order to solve the above-mentioned problem, according to the present invention, a motorcycle includes a fuel tank, an engine, a front suspension, a front wheel, and a front fender. The engine is arranged below the fuel tank. The front suspension is arranged anterior to the fuel tank and the engine, and extends diagonally in the vertical direction. The front wheel is supported at a lower end of the front suspension. The front fender is supported by the front suspension and covers at least the front wheel from above. Further, the motorcycle includes right and left shrouds which are respectively fixed onto side surfaces of the fuel tank. The right and left shrouds are formed to extend forward from the fuel tank, and guide, to the engine, air which flows rearward over the front fender during running of the motorcycle. Each of the right and left shrouds is curved to swell outward in the right-left direction of the motorcycle, and includes, at a position further rearward than the front end of the shroud and further frontward than the rear end of the shroud, an outermost portion which is defined as a portion located furthest outward in the right-left direction of the motorcycle. The outermost portion is located further forward than a position at which the shroud is fixed to the fuel tank. Further, the distance between the front end of the left shroud and the front end of the right shroud is larger than the width of the fuel tank in the right-left direction.

According to the present invention, the distance between the front end of the left shroud and the front end of the right shroud is larger than the width of the fuel tank, and hence a larger amount of the air can be guided to the engine during the running of the motorcycle. Further, the outermost portion is located further forward than the position at which the shroud is fixed to the fuel tank. Therefore, a force which tends to make the shroud close to the center of the right-left direction becomes larger, the force being generated due to the air which is brought against outer surface of front portion of the shroud. As a result, forces which tend to make the shrouds separate from the fuel tank can be reduced.

### BRIEF DESCRIPTION OF THE DRAWINGS

In the accompanying drawings:
FIG. 1 is a side view of a motorcycle according to an embodiment of the present invention;
FIG. 2 is a side view of the front portion of the motorcycle;
FIG. 3 is a front view of the motorcycle;
FIG. 4 is a plan view of the front portion of the motorcycle;
FIG. 5 is a side view of the fuel tank and the body frame of the motorcycle;
FIG. 6 is a plan view of the fuel tank;
FIG. 7 is an exploded perspective view of a shroud of the motorcycle;
FIG. 8 is a perspective view of an outer panel of the shroud; and
FIGS. 9A and 9B are views for illustrating effects obtained by the shroud, FIG. 9A schematically illustrating the shroud cited above, FIG. 9B schematically illustrating a shroud as an object of comparison.

### DETAILED DESCRIPTION OF THE INVENTION

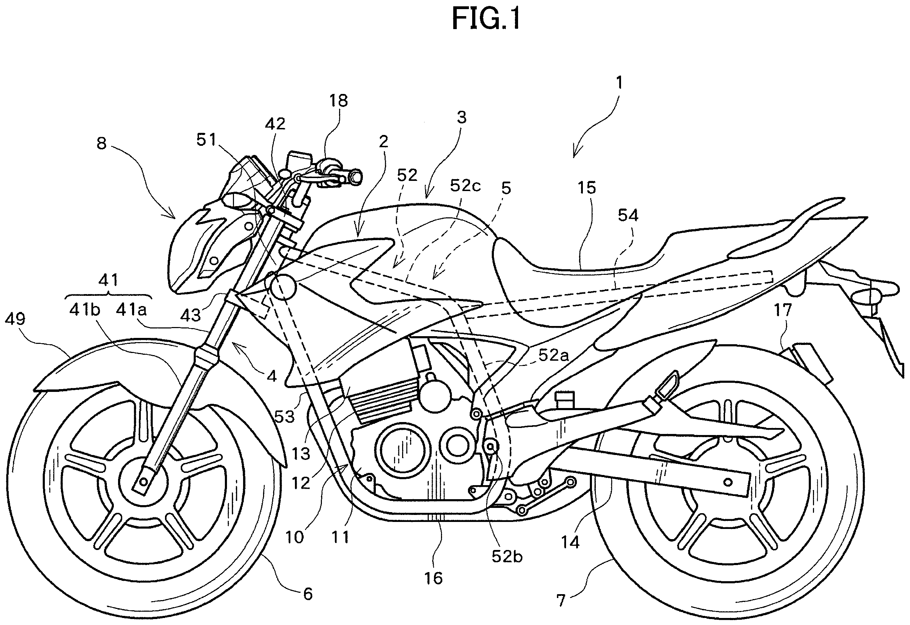

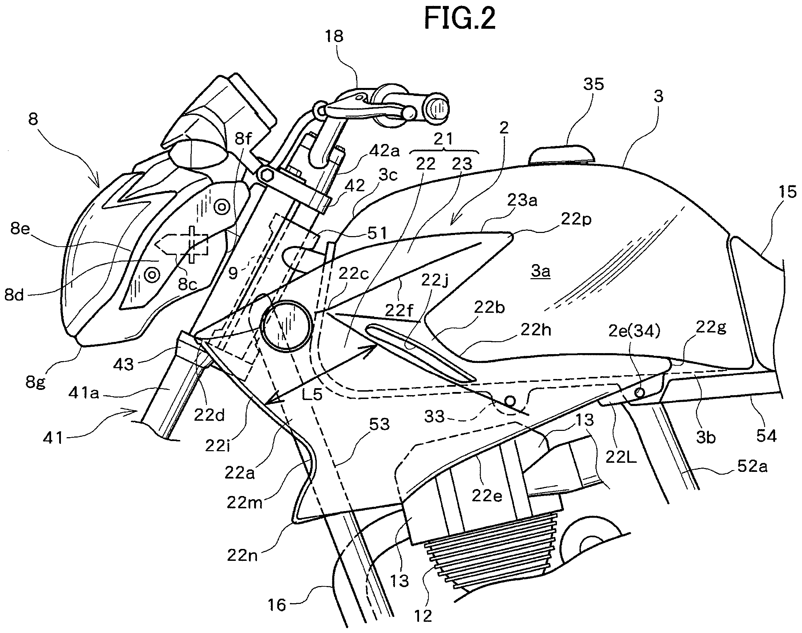

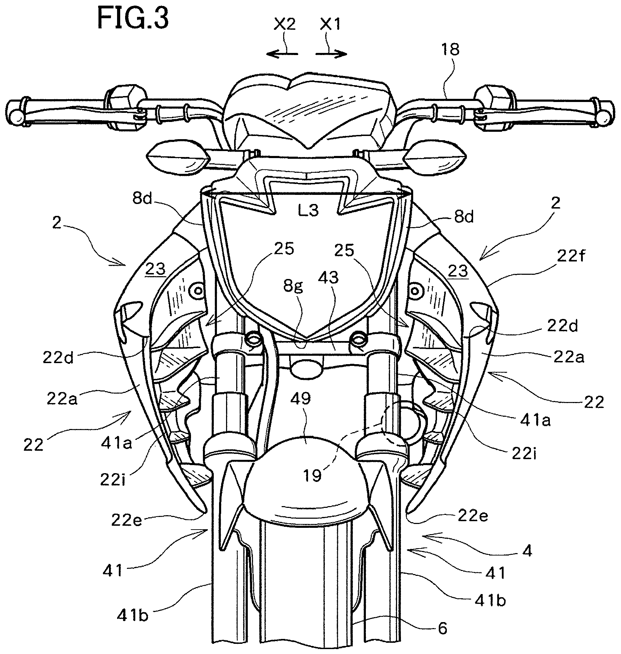

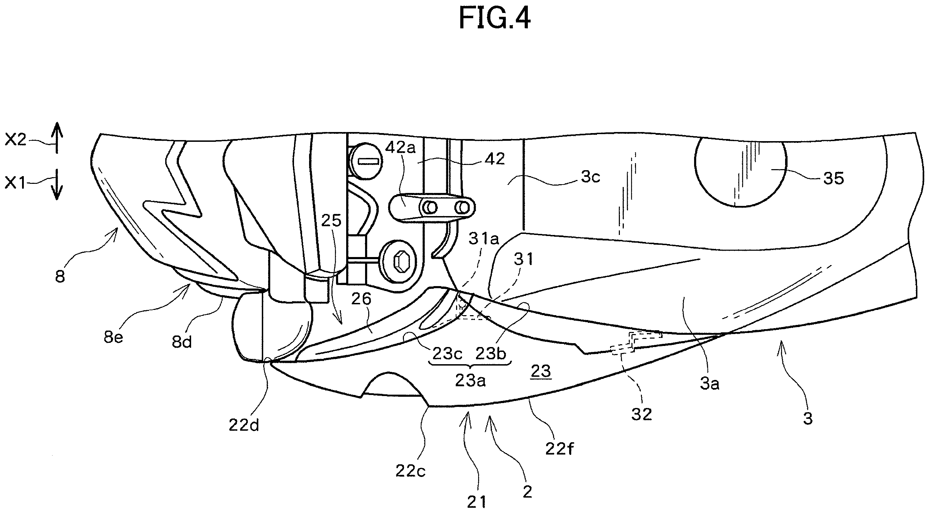

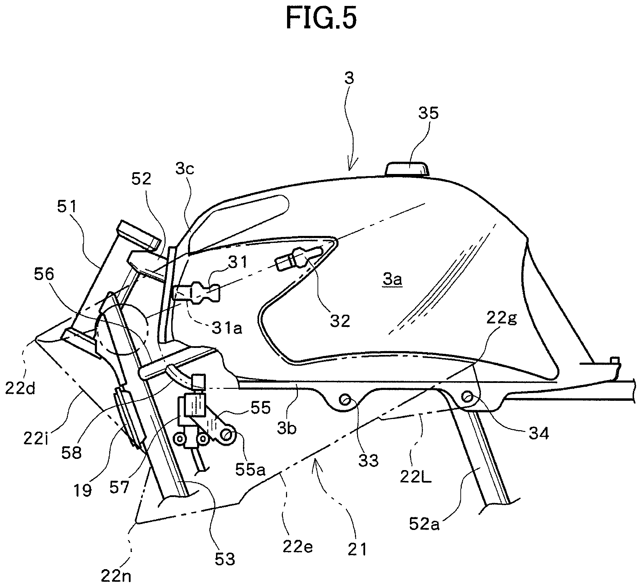

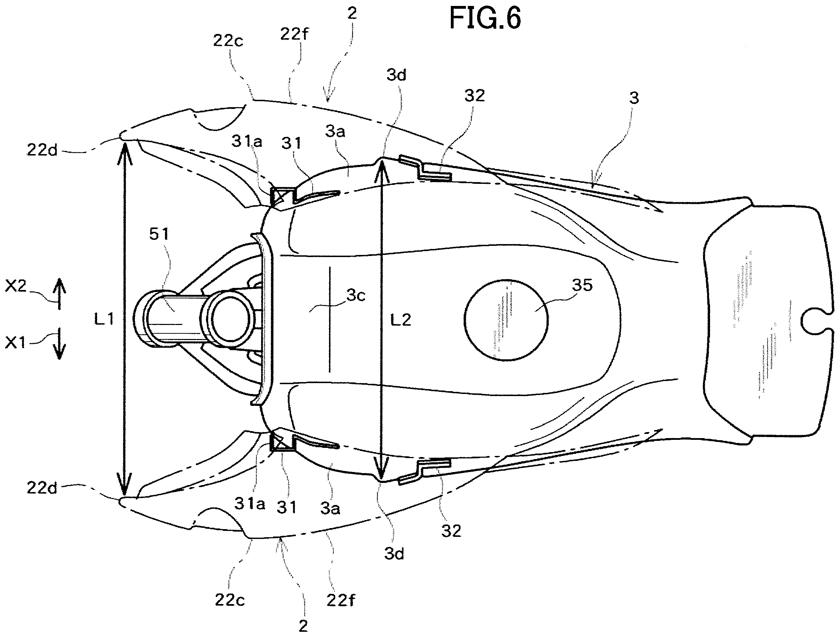

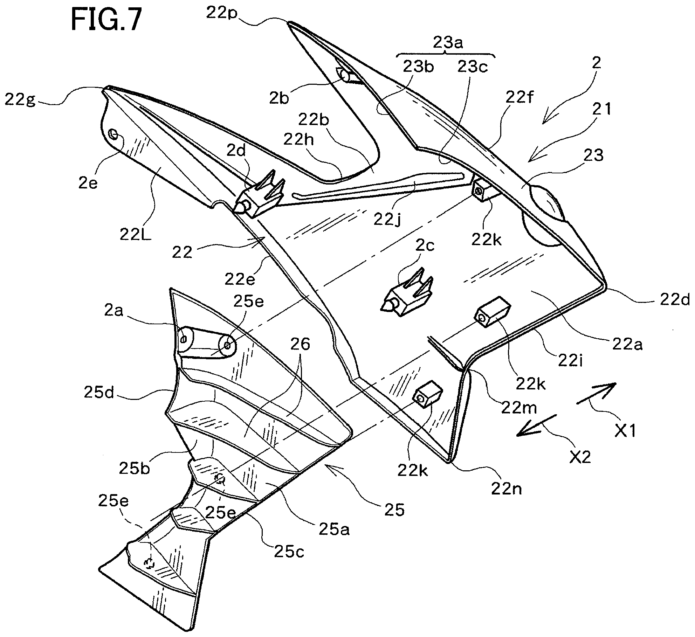

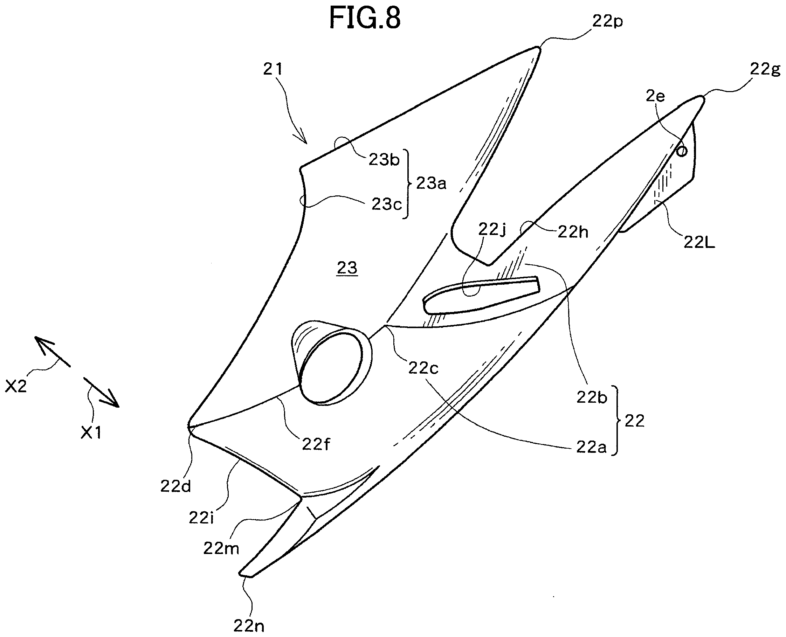

Hereinafter, an embodiment of the present invention will be described with reference to the drawings. FIG. 1 is a side view of a motorcycle 1 as an example according to the embodiment of the present invention. FIG. 2 is a side view of the front portion of the motorcycle 1. FIG. 3 is a front view of the motorcycle 1. FIG. 4 is a plan view of the front portion of the motorcycle 1, which illustrates only a left-side portion of the motorcycle 1. FIG. 5 is a side view of a fuel tank 3 and a body frame 5 of the motorcycle 1. In FIG. 5, the front portion of the fuel tank 3 is partially broken away, and an oil cooler 57 and the like which are arranged below the front portion of the fuel tank 3 are illustrated. FIG. 6 is a plan view of the fuel tank 3. FIG. 7 is an exploded perspective view of one of shrouds 2 provided on the motorcycle 1. FIG. 8 is a perspective view of an outer panel 21 provided on the shroud 2.

As illustrated in FIG. 1, the motorcycle 1 includes a body frame 5. The body frame 5 includes a head pipe 51 at the forefront thereof, and includes a main frame 52 extending rearward from the head pipe 51. The main frame 52 includes a tank rail portion 52c in the front portion thereof. A fuel tank 3 is arranged behind the head pipe 51. The fuel tank 3 is arranged on the tank rail portion 52c and supported by the tank rail portion 52c. Further, the tank rail portion 52c extends rearward above an engine 10 and suspends the engine 10. The main frame 52 is bent downward below the rear portion of the fuel tank 3. The main frame 52 includes a rear frame portion 52a extending downward from the tank rail portion 52c and located behind the engine 10.

A rear arm 14, which extends in the front-rear direction of the motorcycle 1(hereinafter, simply referred to as "front-rear direction"), is disposed on the engine 10. A pivot support portion 52b supporting the front end of the rear arm 14 via a pivot (not shown) is formed on the lower portion of the rear frame portion 52a. The rear arm 14 supports a rear wheel 7 at the rear end thereof, and can swing around the pivot in the vertical direction together with the rear wheel 7.

A seat 15 on which a rider straddle to sit is arranged behind the fuel tank 3. The seat 15 is supported by a seat rail 54 arranged under the seat 15.

Further, the body frame 5 includes a down frame 53 extending diagonally rearward and downward from the head pipe 51. The down frame 53 extends diagonally downward in front of the engine 10, and then bends rearward. The rear portion of the down frame 53 extends rearward under the engine 10 and supports the engine 10. The rear end of the down frame 53 is connected to the rear frame portion 52a.

The engine 10 includes a crankcase 11, a cylinder 12, and a cylinder head 13, which are arranged under the fuel tank 3 and posterior to a front wheel 6. The crankcase 11 is located in the lower portion of the engine 10, and the cylinder 12 and the cylinder head 13 are arranged on the crankcase 11 so as to be directed diagonally upward. An exhaust pipe 16 which discharges the exhaust gas to the rear side of the motorcycle 1 is connected to the engine 10. The exhaust pipe 16 is arranged to protrude forward from the cylinder head 13, and is then bent downward. The exhaust pipe 16 extends diagonally downward in front of the cylinder 12 and the crankcase 11. Then, the exhaust pipe 16 extends below the crankcase 11 to the rear side of the motorcycle 1. In this regard, a muffler 17 is connected to the rear portion of the exhaust pipe 16.

A front suspension 4 is arranged in front of the engine 10 and the fuel tank 3. The front suspension 4 is arranged to extend diagonally in the vertical direction and supports the front wheel 6 at the lower end thereof. As illustrated in FIG. 1 or 3, the front suspension 4 includes right and left shock absorbers 41 which are spaced away from each other in the right-left direction of the motorcycle (direction indicated by arrows X1-X2 of FIG. 3 (hereinafter, simply referred to as "right-left direction")), and an upper bracket 42 and an under bracket 43 which are spaced away from each other in the vertical direction. The right and left shock absorbers 41 are arranged to extend diagonally in the vertical direction, and the upper portions thereof are held by both end portions of the upper bracket 42 and both end portions of the under bracket 43.

A front fender 49, which covers the front wheel 6 from above, is disposed between the lower portions of the right and left shock absorbers 41. The front fender 49 is curved along an outer peripheral surface of the front wheel 6, and is arranged adjacently to the front wheel 6. Each of the shock absorbers 41 includes an inner tube 41a and an outer tube 41b which is movable upward and downward with respect to the inner tube 41a. The outer tube 41b is arranged to extend downward from the inner tube 41a. The front wheel 6 is supported by the lower ends of the outer tubes 41b. Further, the front fender 49 is located between the right and left outer tubes 41b, and is fixed to the outer tubes 41b. Therefore, the front fender 49 is supported so as to be movable upward and downward together with the front wheel 6.

A steering shaft 9 is disposed between the right and left inner tubes 41a that are respectively located in the upper portions of the right and left shock absorbers 41. The upper end and the lower end of the steering shaft 9 are fixed to the upper bracket 42 and the under bracket 43, respectively. A handlebar 18 is disposed above the steering shaft 9. The handlebar 18 is fixed to the upper bracket 42 by a holder 42a provided to the upper bracket 42. As described above, the upper portions of the shock absorbers 41 are held by the upper bracket 42 and the under bracket 43. Further, the steering shaft 9 is inserted inside of the head pipe 51 to be rotatably supported by the head pipe 51. With this structure, the handlebar 18 can turn rightward and leftward around the steering shaft 9 together with the front suspension 4 and the front wheel 6.

A headlight 8 is arranged in front of the front suspension 4. Specifically, the headlight 8 is arranged in front of the upper portions of the right and left shock absorbers 41. As illustrated in FIG. 3, in this example, the width L3 in the right-left direction of the headlight 8 is larger than the distance between the right and left shock absorbers 41. Therefore, in a front view of the motorcycle 1, each of right and left side surfaces 8d of the headlight 8 is located further outward (direction indicated by the arrows X1-X2 of FIG. 3) in the right-left direction than each of the right and left shock absorbers 41. The headlight 8 is fixed to a stay (not shown) fixed to the under bracket 43 and the upper bracket 42. Therefore, the headlight 8 can turn rightward and leftward around the steering shaft 9 together with the front suspension 4 and the handle 18.

In this regard, as illustrated in FIG. 1, the front fender 49 is adjacent to the front wheel 6. Meanwhile, the headlight 8 is arranged to be spaced upward from the front fender 49. Therefore, air (wind), which the motorcycle 1 receives during its running, partially flows rearward between the front fender 49 and the headlight 8, to thereby reach the engine 10 arranged posterior to the front wheel 6.

The motorcycle 1 includes the right and left shrouds 2 which guide the air, which the motorcycle 1 receives during its running, to the engine 10. As illustrated in FIG. 2 or 4, each of the shrouds 2 is fixed onto the side surface 3a of the front portion of the fuel tank 3. Each of the shrouds 2 is arranged to extend diagonally forward and downward from the side surface 3a of the fuel tank 3, and is formed to cover the body of the motorcycle 1 from the outer side in the right-left direction. The shrouds 2 guide, to the engine 10, air which flows rearward over the front fender 49 and below the headlight 8 and flows rearward outside the right and left shock absorbers 41. In this example, the cylinder head 13 is located between the lower portion of the right shroud 2 and the lower portion of the left shroud 2, and the shrouds 2 cover the upper portion of the cylinder head 13 from the outer sides in the right-left direction. In detail, lower edges 22e of the shrouds 2 are located outward in the right-left direction from the cylinder head 13.

Each of the shrouds 2 has the outer panel 21 forming the outer surface of the shroud 2. The outer panel 21 is formed to extend diagonally forward and downward from the side surface 3a of the fuel tank 3. Further, the outer panel 21 is curved to swell outward in the right-left direction. That is, the outer panel 21 has a side surface portion 22 which forms the side surface of the shroud 2 and covers the body of the motorcycle 1 from the outer side in the right-left direction. As illustrated in FIG. 2 or 8, the rear portion 22b of the side surface portion 22 extends forward from the side surface 3a of the fuel tank 3 to be inclined slightly outward. Then, the side surface portion 22 is gently curved toward the center in the right-left direction (center in the width direction of the motorcycle 1 (widthwise center of the front wheel 6)), and the front portion 22a of the side surface portion 22 extends forward to be inclined toward the center in the right-left direction. Therefore, as illustrated in FIG. 2, outermost portions 22c (portions located furthest outward in the right-left direction) of the shrouds 2 are located further rearward than the front ends 22d (front ends of the outer panels 21) of the shrouds 2 and further forward than rear ends 22g (rear ends of the outer panels 21) of the shrouds 2. In this regard, the lower portions of the shrouds 2 extend further rearward than the upper portions thereof. Therefore, the rear end 22p of the upper portion is located further forward than the rear end 22g of the lower portion. The outermost portion 22c is located between the rear end 22p and the front end 22d of the upper portion. Further, in this example, the outermost portion 22c is located on the upper edge 22f of the side surface portion 22.

As illustrated in FIG. 2, each of the shrouds 2 extends forward beyond the front surface 3c of the fuel tank 3, and the front portions of the shrouds 2 are located outward in the right-left direction from the front suspension 4. In this example, the front ends 22d of the shrouds 2 are located outward in the right-left direction from the front suspension 4. That is, the upper portion of the side surface portion 22 extends forward, and the front end 22d thereof reaches a position located outward in the right-left direction from the shock absorber 41. Therefore, in a side view of the motorcycle 1, the front portion of the side surface portion 22 overlaps the front suspension 4. In this regard, the head pipe 51 is located slightly further rearward than the shock absorbers 41, and the front ends 22d of the shrouds 2 are located further forward than the head pipe 51.

The front edge of each of the shrouds 2, that is, a front edge 22i of the front portion 22a of the side surface portion 22, extends diagonally in the vertical direction. A rearmost portion 22m of the front edge 22i is located outward in the right-left direction from the down frame 53. The front edge 22i extends from the rearmost portion 22m diagonally upward and forward to reach the front end 22d. Therefore, the majority of the front edge 22i is located further forward than the down frame 53.

In addition, the side surface portion 22 extends up to a position below the headlight 8. Therefore, the front end 22d is located further forward than the rear end of the headlight 8. In this example, the headlight 8 includes a cover 8e which is formed to cover the outer peripheral edge of the headlight 8 and extend rearward. The front end 22d is located further forward than the rear end 8f of the cover 8e. Further, the front end 22d is located further forward than a rear end of a bulb 8c which is located inside the cover 8e and is held by a reflector (not shown).

As illustrated in FIG. 3, the front portion 22a of the side surface portion 22 is arranged at a slant so that the front portion 22a comes closer to the center of the right-left direction, extending downward. Therefore, the lower edge 22e is located closer to the center in the right-left direction than the upper edge 22f of the side surface portion 22. In this regard, the front portion 22a of the side surface portion 22 in this example extends downward, being gently curved. Further, as illustrated in FIG. 2, the width L5 in the front-rear direction of the front portion 22a of the side surface portion 22 becomes larger toward the bottom. Therefore, the upper edge of the front portion 22a (that is, front portion of the upper edge 22f) is shorter than the lower edge of the front portion 22a.

As illustrated in FIG. 6, the distance L1 between the front end of the left shroud 2 (that is, front end 22d of the left side surface portion 22) and the front end 22d of the right shroud 2 (that is, front end 22d of the right side surface portion 22) is larger than the width L2 of the fuel tank 3 in the right-left direction (distance between right and left outermost portions 3d of the fuel tank 3). Further, as illustrated in FIG. 3, the distance between the front end 22d of the left shroud 2 and the front end 22d of the right shroud 2 is larger than the width L3 of the headlight 8 in the right-left direction. In this regard, the right and left side surfaces 8d of the headlight 8 extend upward from the lower end 8g of the headlight 8 while widening outward in the right-left direction beyond the right and left shock absorbers 41. Therefore, the width L3 of the headlight 8 is larger than the distance between the right and left shock absorbers 41. Air which flows outside the shock absorbers 41 can be guided inside the shrouds 2.

The shroud 2 is formed such that its lower edge (lower edge 22e of the side surface portion 22) extends diagonally forward and downward. In this example, as illustrated in FIG. 2, the lower edge 22e extends diagonally forward and downward from the height of the lower edge 3b of the fuel tank 3 beyond the position of the cylinder head 13. The front end 22n of the lower edge 22e is then located further forward than the down frame 53. As described above, the exhaust pipe 16 is connected to the cylinder head 13 and arranged to protrude forward from the cylinder head 13. In the side view of the motorcycle 1, the front end 22n is located further forward than the exhaust pipe 16. Therefore, fuel which has overflowed from the filler neck 35 of the fuel tank 3 at the time of refueling flows on the lower edge 22e of the side surface portion 22, and can be guided to the position further forward than the exhaust pipe 16.

As illustrated in FIG. 2 or 8, an ejecting port 22j opening rearward is formed in the rear portion 22b of the side surface portion 22. The air guided to the inside of the shrouds 2 is ejected rearward from the ejecting port 22j. In this example, the ejecting port 22j is a hole elongated in the vertical direction. In this regard, a largely-recessed portion is formed in the rear edge of the shroud 2, that is, in the rear edge 22h of the rear portion 22b of the side surface portion 22. In the side view of the motorcycle 1, the ejecting port 22j is located in front of the recessed portion of the rear edge 22h.

As illustrated in FIG. 2 or 3, each of the outer panels 21 has an upper surface portion 23. The upper surface portion 23 extends from the upper edge 22f of the side surface portion 22 toward the center in the right-left direction (toward the side surface 3a of the fuel tank 3), and is arranged to be substantially flush with the fuel tank 3. In this example, in the side view of the motorcycle 1, the upper surface portion 23 extends forward to be slightly inclined downward. Further, the upper surface portion 23 is located behind the headlight 8. Therefore, the air, which flows rearward outside the side surfaces 8d of the headlight 8, is guided upward on the upper surface portion 23.

As illustrated in FIG. 4, the rear portion 23b of the inner edge 23a (edge closer to the center in the right-left direction) of the upper surface portion 23 extends along the side surface 3a of the fuel tank 3 in the front-rear direction. The front portion 23c of the inner edge 23a extends forward and outward from the fuel tank 3. Therefore, the width of the front portion of the upper surface portion 23 becomes smaller toward the front.

As illustrated in FIG. 3 or 7, the right and left shrouds 2 include inner panels 25, respectively. The inner panels 25 guide the air, which has reached the inside of the shrouds 2, to the engine 10. The right and left inner panels 25 are arranged inside the right and left outer panels 21. Specifically, the inner panel 25 is arranged inside the front portion 22a of the side surface portion 22 and below the upper surface portion 23. The inner panel 25 is arranged to come closer to the center of the right-left direction as it extends rearward. Therefore, the rear portion of the inner panel 25 is located closer to the center of the right-left direction than the front portion thereof. In this example, as illustrated in FIG. 7, the inner panel 25 includes a side surface portion 25a arranged to face the front portion 22a of the side surface portion 22. The front edge 25c of the side surface portion 25a is laid on the front edge 22i of the side surface portion 22. The side surface portion 25a is formed to come closer to the center of the right-left direction as extending rearward. Further, the inner panel 25 has a rear surface portion 25b. The rear surface portion 25b is bent from the side surface portion 25a toward the center of the right-left direction to extend toward the center. Therefore, an edge 25d of the rear surface portion 25b is located closer to the center in the right-left direction than the front edge of the side surface portion 25a.

As described above, the cylinder head 13 is arranged inside the lower portions of the shrouds 2, and the inner panels 25 guide air to the cylinder head 13 (see FIG. 2). The width of the rear surface portion 25b becomes larger toward the top. Therefore, the direction of the air which has reached the upper portion of the inner panel 25 is bent more greatly toward the center in the right-left direction than the direction of the air which has reached the lower portion of the inner panel 25. In this regard, the ejecting port 22j formed in the outer panel 21 is located posterior to the side surface portion 25b.

As illustrated in FIG. 3 or 7, a plurality of baffle plates 26 are provided on the inner panel 25. The plurality of baffle plates 26 spread from the side surface portion 25a toward the center in the right-left direction, and face each other in the vertical direction. The baffle plates 26 are arranged to face the upper surface portion 23 of the outer panel 21. The baffle plates 26 prevent the flow of the air which has reached inside the shrouds 2 from being disturbed.

As illustrated in FIG. 3, the motorcycle 1 is provided with a horn 19 that issues a warning sound in response to an operation by the rider. The horn 19 is arranged between the right and left inner panels 25, and is covered with the inner panels 25 from the outer sides in the right-left direction. With this structure, the warning sound of the horn 19 is prevented from spreading in the right-left direction.

The inner panels 25 are fixed to the outer panels 21, respectively. In detail, as illustrated in FIG. 7, a plurality of (three, in this case) fixation holes 25e, which are spaced away from each other in the vertical direction, are formed in the side surface portion 25a of the inner panel 25. The front portion 22a of the outer panel 21 includes bosses 22k at positions corresponding to the fixation holes 25e. A fixation hole is also formed at each of the bosses 22k, and the boss 22k and the fixation hole 25e are fixed to each other with bolts or screws.

The shrouds 2 are fixed to the fuel tank 3, and are supported by the body frame 5. In this example, each of the shrouds 2 includes, in the upper portion thereof, two upper fixation portions 2a and 2b spaced away from each other in the front-rear direction. The rear upper fixation portion 2b is formed on the inner surface of the rear portion 22b of the outer panel 21. Further, a hole, which defines the front upper fixation portion 2a, is formed in the rear surface portion 25b of the inner panel 25. Those upper fixation portions 2a and 2b are fixed to the side surface 3a of the fuel tank 3. In detail, as illustrated in FIG. 6, two fixation plates 31 and 32, which are formed from by bending small plate-like members or the like, are welded to the side surface 3a of the fuel tank 3. The front fixation plate 31 includes, at the front end thereof, a fixation portion 31a facing the rear surface portion 25b in the front-rear direction. A hole is formed in the fixation portion 31a. The front upper fixation portion 2a is fixed to the front of the fixation portion 31a with bolts or screws. Further, a hole, which corresponds to the shape of the rear fixation plate 32, is formed in the rear upper fixation portion 2b. Into the hole formed in the upper fixation portion 2b, the front end of the fixation plate 32 is inserted from the rear. In this regard, as illustrated in FIG. 5 or 6, the fixation portion 31a of the front fixation plate 31 is located further forward than the front surface 3c of the fuel tank 3.

As illustrated in FIG. 7, each of the shrouds 2 includes, in the lower portion thereof, three lower fixation portions 2c, 2d, and 2e which are spaced away from each other in the front-rear direction. In this example, the lower fixation portions 2c and 2d are formed to protrude inward from the side surface portion 22 of the outer panel 21, and a protrusion is formed on the leading end of each of the lower fixation portions 2c and 2d. Further, a fixation plate portion 22L projecting downward is provided at the rear end of the lower edge 22e of the side surface portion 22. In the fixation plate portion 22L, a hole, which defines the lower fixation portion 2e located furthest rearward among the three lower fixation portions, is formed. Meanwhile, as illustrated in FIG. 5, fixation holes 33 and 34 are formed on each of the lower edges 3b of the fuel tank 3. Further, below the front portion of the fuel tank 3, brackets 55 supported by the body frame 5 are arranged. Fixation holes 55a are formed in the brackets 55. The protrusion formed on the lower fixation portion 2c, which is located furthest forward among the three lower fixation portions 2c, 2d, and 2e, is inserted into the fixation hole 55a. Further, the protrusion formed on the lower fixation portion 2d, which is located posterior to the lower fixation portion 2c, is inserted into the fixation hole 33 formed on the lower edge 3b of the fuel tank 3. In addition, the lower fixation portion 2e, which is located furthest rearward, is fixed to the fixation hole 34 of the fuel tank 3 with a bolt or a screw (not shown). In this manner, the shrouds 2 are fixed to the fuel tank 3, and are supported by the body frame 5.

In this regard, a reinforcing pipe 56 bridging between the down frame 35 and the tank rail portion 52c is provided on the front portion of the body frame 5. The bracket 55 is supported by the reinforcing pipe 56. In this example, an oil cooler 57 for cooling lubricating oil of the engine 10 is disposed under the fuel tank 3. The upper portion of the oil cooler 57 is fixed to the reinforcing pipe 56 through a bracket 58. The bracket 55 is fixed to the oil cooler 57 and extends from the oil cooler 57 diagonally rearward and downward.

As described above, each of the outer panels 21 is curved to swell outward in the right-left direction, and includes the outermost portion 22c at a middle portion thereof in the front-rear direction (that is, includes the outermost portion 22c between the front end 22d and the rear end 22g) (see FIG. 2). As illustrated in FIG. 4, the outermost portion 22c is located further forward than fixation positions of the shroud 2 to the fuel tank 3. That is, in a plan view of the motorcycle 1, the outermost portion 22c is located further forward than the upper fixation portions 2a and 2b. In this example, the upper fixation portion 2a is located furthest forward among the three fixation portions 2a to 2e which are fixed to the fuel tank 3 or the body frame 5. The outermost portion 22c is located further forward than the upper fixation portion 2a. Further, the fixation portion 31a of the fixation plate 31, to which the upper fixation portion 2a is fixed, is located further forward than the front surface 3c of the fuel tank 3, and the outermost portion 22c is located further forward than the front surface 3c. Further, the outermost portion 22c is located further rearward than the head pipe 51 (see FIG. 2).

As described above, in the motorcycle 1, each of the shrouds 2 is fixed to the side surface 3a of the fuel tank 3, and is arranged to extend forward from the fuel tank 3. The shrouds 2 are curved to swell outward in the right-left direction. Further, each of the shrouds 2 includes, at a position further rearward than the front end 22d of the shroud 2 and further forward than the rear end 22g, the outermost portion 22c which is defined as a portion located furthest outward in the right-left direction. The outermost portion 22c is located further forward than the fixation positions of the shroud 2 to the fuel tank 3 (in the above description, positions at which the fixation portions 2a to 2e are provided). Further, the distance L1 between the front end 22d of the left shroud 2 and the front end 22d of the right shroud 2 is larger than the width L2 of the fuel tank 3 in the right-left direction. Since the distance L1 between the front ends 22d of the right and left shrouds 2 is larger than the width L2 of the fuel tank 3 as cited above, a larger amount of air can be guide to the engine 10 during running of the motorcycle 1. Further, since the outermost portion 22c is located further forward than the fixation positions of the shroud 2 to the fuel tank 3, a force which tends to bring the shrouds 2 closer to the center of the right-left direction can become larger, the force being generated due to the air brought against the outer surface of the front portion of the shroud 2. As a result, a force which tends to separate the shroud 2 from the fuel tank 3 can be reduced.

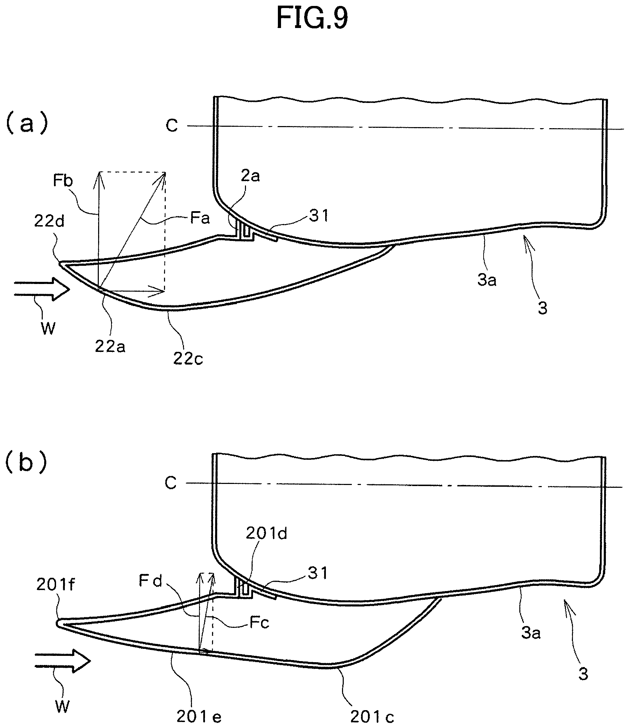

FIGS. 9A and 9B are views for illustrating an effect obtained by the shrouds 2 as described above. FIG. 9A schematically illustrates the fuel tank 3 and the shroud 2. FIG. 9B schematically illustrates a shroud 201 as an object of comparison. The shroud 201 is also formed to be curved outward, and includes an outermost portion 201c. Further, a position in the front-rear direction of a fixation portion 201d, at which the shroud 201 is fixed to the fuel tank 3, is the same as the position of the upper fixation portion 2a at which the shroud 2 is fixed to the fuel tank 3. The position of the outermost portion 201c is located further rearward than the fixation portion 201d.

As illustrated in FIG. 9B, when the shroud 201 receives air W from the front during running of the motorcycle, a force Fc perpendicular to a front portion 201e which is defined as a portion located further forward than the outermost portion 201c acts on the front portion 201e. As a result, a force Fd which tends to bring the shroud 201 closer to the center C of the right-left direction acts on the shroud 201. Further, as illustrated in FIG. 9A, when the shroud 2 receives the air W from the front, a force Fa perpendicular to the front portion 22a of the side surface portion 22 acts on the front portion 22a. As a result, a force Fb which tends to bring the shroud 2 closer to the center C of the right-left direction acts on the shroud 2. While the outermost portion 22c is located further forward than the upper fixation portion 2a, the outermost portion 201c is located further rearward than the fixation portion 201d. Therefore, the moment generated at the upper fixation portion 2a due to the force Fb becomes larger than the moment generated at the fixation portion 201d due to the force Fd. As a result, the force, which tends to separate the shrouds 2 from the fuel tank 3, is smaller than the force which tends to separate the shrouds 201 from the fuel tank 3. In this regard, in the example illustrated in FIGS. 9A and 9B, the angle of the front portion 22a with respect to the direction in which the air W flows is larger than the angle of the front portion 201e with respect to the direction in which the air W flows. Therefore, the force Fa is larger than the force Fc. As a result, the force which tends to separate the shrouds 2 from the fuel tank 3 is even smaller than the force which tends to separate the shrouds 201 from the fuel tank 3. The above description is an explanation on the effects obtained by arranging the outermost portion 22c further forward than the upper fixation portion 2a.

In the motorcycle 1, the shrouds 2 are located outward in the right-left direction from the front suspension 4, and overlap the front suspension 4 in the side view of the motorcycle 1. With this structure, the shrouds 2 can receive the air which has been brought against the front suspension 4.

Further, in the motorcycle 1, the front ends 22d of the shrouds 2 are located further forward than the rear end 8f of the headlight 8. With this structure, the shrouds 2 can receive the air which has been brought against the headlight 8. In this regard, in the motorcycle 1, the front ends 22d of the shrouds 2 are located further forward than the rear end of the bulb 8c provided in the headlight 8.

Further, in the motorcycle 1, the front suspension 4 includes the right and left shock absorbers 41 which are arranged anterior to the engine 10 and extend diagonally in the vertical direction. The headlight 8 is arranged in front of the right and left shock absorbers 41, and has the width L3 in the right-left direction larger than the distance between the right shock absorber 41 and the left shock absorber 41. Further, the distance L1 between the front end 22d of the left shroud 2 and the front end 22d of the right shroud 2 is larger than the width L3 of the headlight 8. With this structure, the shrouds 2 can receive an even larger amount of the air.

Further, in the motorcycle 1, the right and left shrouds 2 include the inner panels 25 inside thereof. The inner panel 25 is formed to come close to the center in the right-left direction, extending rearward, and to guide the air which the motorcycle 1 receives during its running to the engine. With this structure, the air which the motorcycle 1 receives during its running can be guided smoothly toward the engine 10.

Further, in the motorcycle 1, each of the inner panels 25 is provided with the plurality of baffle plates 26 spreading from the inner panels 25 toward the center in the right-left direction. With this structure, the flow of the air can be prevented from being disturbed inside the shrouds 2.

Further, in the motorcycle 1, the horn 19 is arranged between the right and left inner panels 25. With this structure, the warning sound of the horn 19 can be prevented from spreading in the right-left direction.

Further, in the motorcycle 1, the lower edges 22e of the shrouds 2 are formed to extend diagonally forward and downward, and the front ends 22n of the lower edges 22e of the shrouds 2 are located further forward than the exhaust pipe 16 of the engine 10. With this structure, the fuel which has overflowed from the filler neck 35 of the fuel tank 3 at the time of refueling can be guided along the lower edges 22e of the side surface portions 22 to a position further forward than the exhaust pipe 16.

Note that the present invention is not limited to the above-mentioned motorcycle 1, and various modifications are possible. For example, in the motorcycle 1, the front ends 22d of the shrouds 2 are located outward in the right-left direction from the shock absorbers 41. However, positions of the front ends 22d are not limited thereto. For example, the shrouds 2 may extend further forward beyond the positions of the shock absorbers 41.

Further, in the above description, each of the shrouds 2 is provided with the inner panel 25. However, the shrouds 2 may be constituted only by the outer panels 21.

## Claims

1. A motorcycle, comprising:
a fuel tank (3);
an engine (10) arranged under the fuel tank (3);
a front suspension (4) arranged anterior to the fuel tank (3) and the engine (10), and extending diagonally in the vertical direction, the front suspension (4) comprising an upper bracket (42) and an under bracket (43) spaced away from each other in the vertical direction;
a front wheel (6) supported at a lower end of the front suspension (4) ;
a headlight (8) arranged in front of the front suspension (4) and fixed to a stay fixed to the under bracket (43) and the upper bracket (42) to be capable of turning together with the front suspension (4);
a front fender (49) supported by the front suspension (4) and covering at least the front wheel (6) from above, wherein the front fender (49) is arranged to be spaced downward from the headlight (8) of the motorcycle such that air which the motorcycle receives during its running, partially flows rearward between the front fender (49) and the headlight (8) to thereby reach the engine (10) arranged posterior to the front wheel (6);
right and left shrouds (2) fixed onto side surfaces (3a) of the fuel tank (3), respectively, and formed to extend forward from the fuel tank (3) and guide air, which flows rearward over the front fender (49) during running of the motorcycle, to the engine (10),
wherein:
each of the right and left shrouds (2) is curved to swell outward in the right-left direction of the motorcycle and includes a outermost portion (22c) which is defined as a portion located furthest outward in the right-left direction, the outermost portion (22c) being positioned further rearward than the front end (22d) of the shroud (2) and further forward than the rear end (22g) of the shroud (2) ; and
the outermost portion (22c) is located further forward than a position at which the shroud (2) is fixed to the fuel tank (3);
**characterized in that**
the distance (L1) between a front end (22d) of the left shroud and the front end (22d) of the right shroud is larger than the width (L2) of the fuel tank in the right-left direction, and
front portions (22a) of the right and left shrouds (2) are located outward in the right-left direction from the front suspension (4), and overlap the front suspension (4) in a side view of the motorcycle.

2. The motorcycle according to claim 1, wherein the front ends (22d) of the right and left shrouds (2) are located further forward in the front-rear direction of the motorcycle than a rear end of the headlight (8).

3. The motorcycle according to claim 2, wherein the front ends (22d) of the right and left shrouds (2) are located further forward in the front-rear direction than a rear end of a bulb (8c) provided in the headlight (8).

4. The motorcycle according to claim 1, wherein the front suspension (4) comprises right and left shock absorbers (41) arranged anterior to the engine (10) and extending diagonally in the vertical direction;
a headlight (8), which has a width (L3) in the right-left direction larger than the distance between the left shock absorber (41) and the right shock absorber (41), is arranged in front of the right and left shock absorbers (41); and
the distance (L1) between the front end (22d) of the left shroud (2) and the front end (22d) of the right shroud (2) is larger than the width (L3) of the headlight (8).

5. The motorcycle according to claim 1, wherein:
each of the right and left shrouds (2) includes a inner panel (25); and
the inner panels (25) are respectively formed to come closer to the center in the right-left direction extending rearward, and to guide air, which the motorcycle receives during its running, to the engine (10).

6. The motorcycle according to claim 5, wherein each of the inner panels (25) is provided with a plurality of baffle plates (26) spreading from the inner panel (25) toward the center of the right-left direction.

7. The motorcycle according to claim 5, further comprising a horn (19) arranged between the right inner panel (25) and the left inner panel (25).

8. The motorcycle according to claim 1, wherein:
lower edges (22e) of the right and left shrouds (2) are formed to extend diagonally forward and downward; and
front ends (22n) of the lower edges (22e) of the right and left shrouds (2) are located further forward than an exhaust pipe (16) provided on the engine (10).

## Patentansprüche

1. Ein Motorrad, das folgende Merkmale aufweist:
einen Treibstofftank (3);
einen Motor (10), der unter dem Treibstofftank (3) angeordnet ist;
eine Vorderradaufhängung (4), die vor dem Treibstofftank (3) und dem Motor (10) angeordnet ist und sich in der Vertikalrichtung diagonal erstreckt, wobei die Vorderradaufhängung (4) eine obere Halterung (42) und eine untere Halterung (43) aufweist, die in der Vertikalrichtung voneinander beabstandet sind;
ein Vorderrad (6), das an einem unteren Ende der Vorderradaufhängung (4) getragen wird;
einen Scheinwerfer (8), der vor der Vorderradaufhängung (4) angeordnet und an einer Strebe fixiert ist, die an der unteren Halterung (43) und der oberen Halterung (42) fixiert ist, um sich zusammen mit der Vorderradaufhängung (4) drehen zu können;
ein vorderes Schutzblech (49), das durch die Vorderradaufhängung (4) getragen wird und zumindest das Vorderrad (6) von oben bedeckt, wobei das vordere Schutzblech (49) so angeordnet ist, dass es von dem Scheinwerfer (8) des Motorrads derart nach unten hin beabstandet ist, dass Luft, die das Motorrad während seines Betriebs aufnimmt, teilweise zwischen dem vorderen Schutzblech (49) und dem Scheinwerfer (8) nach hinten strömt und dadurch den Motor (10) erreicht, der hinter dem Vorderrad (6) angeordnet ist;
eine rechte und eine linke Abdeckung (2), die jeweils an Seitenoberflächen (3a) des Kraftstofftanks (3) fixiert sind und so gebildet sind, dass sie sich von dem Kraftstofftank (3) nach vorne erstrecken und Luft, die über das vordere Schutzblech (49) während eines Betriebs des Motorrads nach hinten strömt, zu dem Motor (10) führen,
wobei:
sowohl die rechte als auch die linke Abdeckung (2) so gekrümmt ist, dass sie sich in der Rechts-Links-Richtung des Motorrads nach außen wölben und einen äußersten Abschnitt (22c) aufweisen, der als ein Abschnitt definiert ist, der in der Rechts-Links-Richtung am weitesten außen positioniert ist, wobei der äußerste Abschnitt (22c) weiter hinten als das vordere Ende (22d) der Abdeckung (2) und weiter vorne als das hintere Ende (22g) der Abdeckung (2) positioniert ist; und
der äußerste Abschnitt (22c) weiter vorne positioniert ist als eine Position, an der die Abdeckung (2) an dem Kraftstofftank (3) fixiert ist;
**dadurch gekennzeichnet, dass**:
die Entfernung (L1) zwischen einem vorderen Ende (22d) der linken Abdeckung und dem vorderen Ende (22d) der rechten Abdeckung in der Rechts-Links-Richtung größer ist als die Breite (L2) des Kraftstofftanks und
vordere Abschnitte (22a) der rechten und der linken Abdeckung (2) in der Rechts-Links-Richtung von der Vorderradaufhängung (4) nach außen hin positioniert sind und die Vorderradaufhängung (4) in einer Seitenansicht des Motorrads überlappen.

2. Das Motorrad gemäß Anspruch 1, bei dem die vorderen Enden (22d) der rechten und der linken Abdeckung (2) in der Vorne-Hinten-Richtung des Motorrads weiter vorne positioniert sind als ein hinteres Ende des Scheinwerfers (8).

3. Das Motorrad gemäß Anspruch 2, bei dem die vorderen Enden (22d) der rechten und der linken Abdeckung (2) in der Vorne-Hinten-Richtung weiter vorne positioniert sind als ein hinteres Ende einer Glühlampe (8c), die in dem Scheinwerfer (8) vorgesehen ist.

4. Das Motorrad gemäß Anspruch 1, bei dem die Vorderradaufhängung (4) einen rechten und einen linken Stoßdämpfer (41) aufweist, die in der Vertikalrichtung vor dem Motor (10) angeordnet sind und sich diagonal erstrecken;
ein Scheinwerfer (8), der in der Rechts-Links-Richtung eine Breite (L3) aufweist, die größer ist als die Entfernung zwischen dem linken Stoßdämpfer (41) und dem rechten Stoßdämpfer (41), vor dem rechten und dem linken Stoßdämpfer (41) angeordnet ist; und
die Entfernung (L1) zwischen dem vorderen Ende (22d) der linken Abdeckung (2) und dem vorderen Ende (22d) der rechten Abdeckung (2) größer ist als die Breite (L3) des Scheinwerfers (8).

5. Das Motorrad gemäß Anspruch 1, bei dem:
sowohl die rechte als auch die linke Abdeckung (2) eine Innenplatte (25) aufweist; und
die Innenplatten (25) jeweils so gebildet sind, dass sie in der Rechts-Links-Richtung, sich nach hinten erstreckend, näher zu der Mitte gelangen und Luft, die das Motorrad während seines Betriebs aufnimmt, zu dem Motor (10) führen.

6. Das Motorrad gemäß Anspruch 5, bei dem jede der Innenplatten (25) mit einer Mehrzahl von Leitplatten (26) versehen ist, die von der Innenplatte (25) in Richtung der Mitte der Rechts-Links-Richtung laufen.

7. Das Motorrad gemäß Anspruch 5, das ferner eine Hupe (19) aufweist, die zwischen der rechten Innenplatte (25) und der linken Innenplatte (25) angeordnet ist.

8. Das Motorrad gemäß Anspruch 1, bei dem:
untere Ränder (22e) der rechten und der linken Abdeckung (2) so gebildet sind, dass sie sich diagonal nach vorne und nach unten erstrecken; und
vordere Enden (22n) der unteren Ränder (22e) der rechten und der linken Abdeckung (2) weiter vorne positioniert sind als ein Auspuffrohr (16), das an dem Motor (10) vorgesehen ist.

## Revendications

1. Motocyclette, comprenant:
un réservoir de carburant (3);
un moteur (10) disposé sous le réservoir de carburant (3);
une suspension avant (4) disposée en avant du réservoir de carburant (3) et du moteur (10) et s'étendant en diagonale dans la direction verticale, la suspension avant (4) comprenant un support supérieur (42) et un support inférieur (43) distants l'un de l'autre dans la direction verticale;
une roue avant (6) supportée à une extrémité inférieure de la suspension avant (4);
un phare (8) disposé devant la suspension avant (4) et fixé à une béquille fixée au support inférieur (43) et au support supérieur (42) de manière à être apte à tourner ensemble avec la suspension avant (4);
un garde-boue avant (49) supporté par la suspension avant (4) et recouvrant au moins la roue avant (6) par le haut, où le garde-boue avant (49) est disposé de manière à être distant vers le bas du phare (8) de la motocyclette de sorte que l'air que reçoit la motocyclette pendant sa marche circule partiellement vers l'arrière entre le garde-boue avant (49) et le phare (8) pour atteindre ainsi le moteur (10) disposé en arrière de la roue avant (6);
des carénages droit et gauche (2) fixés respectivement aux surfaces latérales (3a) du réservoir de carburant (3) et formés de manière à s'étendre vers l'avant depuis le réservoir de carburant (3) et à guider l'air qui circule vers l'arrière par-dessus le garde-boue avant (49), pendant la marche de la motocyclette, vers le moteur (10),
dans laquelle:
chacun des carénages droit et gauche (2) est courbé de manière à être gonflé vers l'extérieur dans la direction droite-gauche de la motocyclette et comporte une partie la plus à l'extérieur (22c) qui est définie comme partie située la plus à l'extérieur dans la direction droite-gauche, la partie la plus à l'extérieur (22c) étant positionnée plus en arrière que l'extrémité avant (22d) du carénage (2) et plus en avant que l'extrémité arrière (22g) du carénage (2); et
la partie la plus à l'extérieur (22c) est située plus en avant qu'une position à laquelle le carénage (2) est fixé au réservoir de carburant (3);
**caractérisée par le fait que**
la distance (L1) entre une extrémité avant (22d) du carénage gauche et l'extrémité avant (22d) du carénage droit est supérieure à la largeur (L2) du réservoir de carburant dans la direction droite-gauche, et
les parties avant (22a) des carénages droit et gauche (2) sont situées vers l'extérieur dans la direction droite-gauche de la suspension avant (4) et viennent en recouvrement avec la suspension avant (4) en vue de côté de la motocyclette.

2. Motocyclette selon la revendication 1, dans laquelle les extrémités avant (22d) des carénages droit et gauche (2) sont situées plus en avant dans la direction avant-arrière de la motocyclette qu'une extrémité arrière du phare (8).

3. Motocyclette selon la revendication 2, dans laquelle les extrémités avant (22d) des carénages droit et gauche (2) sont situées plus en avant dans la direction avant-arrière qu'une extrémité arrière d'une ampoule (8c) prévue dans le phare (8).

4. Motocyclette selon la revendication 1, dans laquelle la suspension avant (4) comprend des amortisseurs droit et gauche (41) disposés en avant du moteur (10) et s'étendant en diagonale dans la direction verticale;
un phare (8), qui présente une largeur (L3) dans la direction droite-gauche plus grande que la distance entre l'amortisseur gauche (41) et l'amortisseur droit (41), est disposé devant les amortisseurs droit et gauche (41); et
la distance (L1) entre l'extrémité avant (22d) du carénage gauche (2) et l'extrémité avant (22d) du carénage droit (2) est supérieure à la largeur (L3) du phare (8).

5. Motocyclette selon la revendication 1, dans laquelle:
chacun des carénages droit et gauche (2) comporte un panneau intérieur (25); et
les panneaux intérieurs (25) sont respectivement formés de manière à se rapprocher du centre, dans la direction droite-gauche, en s'étendant vers l'arrière et à guider l'air que reçoit la motocyclette pendant sa marche vers le moteur (10).

6. Motocyclette selon la revendication 5, dans laquelle chacun des panneaux intérieurs (25) est pourvu d'une pluralité de déflecteurs (26) s'étendant du panneau intérieur (25) vers le centre de la direction droite-gauche.

7. Motocyclette selon la revendication 5, comprenant par ailleurs un klaxon (19) disposé entre le panneau intérieur droit (25) et le panneau intérieur gauche (25).

8. Motocyclette selon la revendication 1, dans laquelle:
les bords inférieurs (22e) des carénages droit et gauche (2) sont formés de manière à s'étendre en diagonale vers l'avant et vers le bas; et
les extrémités avant (22n) des bords inférieurs (22e) des carénages droit et gauche (2) sont situées plus en avant qu'un tuyau d'échappement (16) prévu sur le moteur (10).
